# EUROPEAN PATENT APPLICATION

(11) **EP 4 841 751 A1**
(43) Date of publication of application: **18.11.2026**
(21) Application number: 25858968.8
(22) Date of filing: 13.08.2025
(51) Int. Cl.: H01M 10/613

(54) **HEAT EXCHANGE ASSEMBLY, BATTERY DEVICE, ENERGY STORAGE DEVICE, AND ELECTRICAL DEVICE**

(30) Priority: 26.08.2024 WO PCT/CN2024/114643; 03.03.2025 CN 202510244916
(71) Applicant: Contemporary Amperex Technology Co., Limited, Ningde, Fujian 352100 (CN)
(72) Inventor: GAO, Bang, Ningde, Fujian 352100 (CN); SONG, Feiting, Ningde, Fujian 352100 (CN); LIU, Lihui, Ningde, Fujian 352100 (CN); HOU, Yuepan, Ningde, Fujian 352100 (CN); HUANG, Xiaoteng, Ningde, Fujian 352100 (CN)
(74) Representative: Kraus & Lederer PartGmbB
(86) International application number: PCT/CN2025/114353
(87) International publication number: WO 2026/045924

(57) **Abstract**

Embodiments of the present disclosure provide a heat exchange assembly, a battery device, an energy storage device, and an electrical device. The battery device comprises a housing, a battery cell assembly, and a heat exchange assembly. The battery cell assembly is arranged in the housing. The heat exchange assembly comprises at least two heat exchange members. At least one heat exchange member is configured as a flexible member. The at least two heat exchange members are stacked, and at least one medium flow channel is formed between the heat exchange members. The at least one medium flow channel is used to conduct a heat exchange medium. The heat exchange medium is used to perform heat exchange with the battery cell assembly. The heat exchange assembly of the battery device provided in the embodiments of the present disclosure comprises a flexible member. The mass of the flexible member is relatively light, thereby reducing the mass of the heat exchange assembly and reducing the production cost of the heat exchange assembly. In addition, this configuration enables the heat exchange assembly to be better fitted to the housing and/or the battery cell assembly, thereby improving the heat exchange efficiency and heat exchange performance of the heat exchange assembly.

## Description

### CROSS-REFERENCE TO RELATED APPLICATIONS

The present disclosure is based on and claims priority to Chinese Patent Application No. 202510244916. X, filed on March 03, 2025, and entitled "Heat Exchange Assembly, Battery Device, Energy Storage Device, and Electrical Device" and PCT International Patent Application No. PCT/CN2024/114643, filed on August 26, 2024, and entitled "Heat Exchange Assembly, Battery Device, Electrical Device, and Energy Storage Device", the entire contents of which are incorporated herein by reference.

### TECHNICAL FIELD

The present disclosure relates to the field of battery technologies, and in particular, to a heat exchange assembly, a battery device, an energy storage device, and an electrical device.

### BACKGROUND

In a new energy vehicle equipped with a battery device, the battery device may be used to provide power in whole or in part. During the use of the battery device, battery cells in the battery device may generate heat. If the heat is excessively high, the performance and service life of the battery device will be adversely affected. Therefore, how to reduce the weight of a heat exchange assembly while effectively dissipating heat from the battery cells of the battery device has become an important research direction in the art.

### SUMMARY

In view of this, embodiments of the present disclosure are intended to provide a heat exchange assembly, a battery device, an energy storage device, and an electrical device, which can reduce the weight of the heat exchange assembly to a certain extent.

Accordingly, a first aspect of the embodiments in the present disclosure provides a battery device, comprising:
a housing;
a battery cell assembly, where the battery cell assembly is arranged in the housing; and
a heat exchange assembly, the heat exchange assembly comprises at least two heat exchange members, at least one of the heat exchange members is configured as a flexible member, the at least two heat exchange members are stacked, and at least one medium flow channel is formed between the heat exchange members, where the at least one medium flow channel is used to conduct a heat exchange medium, and the heat exchange medium is used to perform heat exchange with the battery cell assembly.

The battery device provided in the embodiments of the present disclosure comprises the housing, the battery cell assembly, and the heat exchange assembly, the battery cell assembly is arranged in the housing, and the housing protects the battery cell assembly. The heat exchange assembly is used to perform heat exchange with the battery cell assembly. The heat exchange assembly comprises the flexible member. The mass of the flexible member is relatively light, thereby reducing the mass of the heat exchange assembly, reducing the production cost of the heat exchange assembly, and reducing the mass of the battery device. In addition, by configuring the heat exchange assembly to comprise a flexible structure, the heat exchange assembly can be better fitted to the housing and/or the battery cell assembly, which is beneficial to absorbing an assembly tolerance of the heat exchange assembly without using a sealant or a thermally conductive material, the degree of fit between the heat exchange assembly and the housing and/or the battery cell assembly is improved, and the effective heat exchange area between the heat exchange assembly and the housing and/or the battery cell assembly is increased, thereby improving the heat exchange efficiency and heat exchange performance of the heat exchange assembly.

In some embodiments, at least one of the heat exchange members is configured as a rigid member, and the flexible member and the rigid member are stacked to form the medium flow channel.

Herein, by configuring at least one of the heat exchange members as a rigid member, the rigid member can support a flexible member, which is beneficial to improving the structural strength and stability of the heat exchange assembly, and further improving the heat exchange efficiency and heat exchange performance of the heat exchange assembly.

In some embodiments, the housing and the heat exchange assembly are enclosed to form an accommodating cavity, and the battery cell assembly is arranged in the accommodating cavity.

In this way, it is beneficial to reducing materials used by the housing, and further beneficial to reducing the weight of the heat exchange assembly and reducing the cost. In addition, the heat exchange assembly can be in direct contact with the battery cell assembly, thereby further improving the heat exchange efficiency between the heat exchange assembly and the battery cell assembly.

In some embodiments, the flexible member and the rigid member form a hot pressing region and a medium flow channel through hot pressing, and the flexible member and the rigid member are connected to each other in at least a partial region of the hot pressing region.

In this embodiment, the flexible member is sealed by using the hot pressing process, to be specific, the hot pressing region is formed through hot pressing, and the hot pressing region divides the heat exchange assembly to form at least one medium flow channel. The forming method is simple.

In some embodiments, the heat exchange assembly further comprises a support member, and the support member is arranged in the hot pressing region and is located on the side of the flexible member away from the rigid member.

In this embodiment, the support member is arranged, and the support member is arranged in the hot pressing region, so that the support member may be used to support the flexible member, to improve the stability of the flexible member.

In some embodiments, the heat exchange assembly further comprises an adhesive layer, and the support member and the flexible member are bonded by using the adhesive layer.

In this embodiment, the support member and the flexible member are bonded by using the adhesive layer, and the connection manner is simple.

In some embodiments, the flexible member is configured as a metal-plasticized film.

In this embodiment, since the metal-plasticized film is thin and has a small weight, and the medium flow channel is formed between the metal-plasticized film and the heat exchange member, which is not affected by an extrusion process and does not need to satisfy a requirement of a large thickness, so that the overall thickness and weight of the heat exchange assembly can be reduced. Meanwhile, since the heat exchange assembly has an insulation property, a risk of insulation failure can be reduced. A risk of reaction between the heat exchange assembly and the heat exchange medium flowing inside is reduced, and a risk of corrosion and leakage of the heat exchange medium is further reduced.

In some embodiments, the flexible member is configured as an aluminum-plasticized film.

The aluminum-plasticized film has properties of high barrier, good cold pressing formability, puncture resistance, electrolyte solution stability resistance, and electrical insulation.

In some embodiments, the flexible member is of a layered structure, the flexible member comprises a metal layer and a non-metal layer, and the metal layer and the non-metal layer are sequentially stacked.

In this embodiment, the flexible member arranged by sequentially stacking the metal layer and the non-metal layer has a small thickness and a small weight, and by forming the medium flow channel between at least two flexible members, which is not affected by an extrusion process and does not need to satisfy a requirement of a large thickness, so the overall thickness and weight of the heat exchange assembly can be reduced. In addition, the heat exchange assembly does not react with the heat exchange medium flowing inside, so there is no risk of corrosion and leakage.

In some embodiments, the metal layer comprises one or more of an aluminum foil, a copper foil, and a steel foil.

By configuring the metal layer as one or more of an aluminum foil, a copper foil and a steel foil, the flexible member may have certain structural strength and may have an isolation function.

In some embodiments, the non-metal layer comprises one or more of polypropylene, polyvinyl chloride, and polyethylene,
so that the flexible member may have a certain waterproof function.

In some embodiments, the non-metal layer is a hot-melt layer.

Herein, the non-metal layer is configured as a hot-melt layer, that is, the non-metal layer is made of a hot-melt material, which is beneficial to compounding the non-metal layer and the metal layer together through hot melting, molding is simple, and production efficiency is high.

In some embodiments, the flexible member is of a layered structure, the flexible member comprises a corrosion-resistant layer, an isolation layer, and a waterproof layer that are sequentially arranged, and the waterproof layer is closer to the medium flow channel than the corrosion-resistant layer.

In this embodiment, the flexible member is configured to comprise a corrosion-resistant layer, an isolation layer, and a waterproof layer that are sequentially arranged, and the waterproof layer is closer to the medium flow channel than the corrosion-resistant layer, which is beneficial to improving the reliability of the heat exchange assembly.

In some embodiments, the thickness of the isolation layer is 6.5 µm to 100 µm,
so that the flexible member may have certain structural strength and flexibility.

In some embodiments, the thickness of the isolation layer is 6.5 µm to 15 µm,
so that the flexible member further may have certain structural strength and flexibility.

In some embodiments, the thickness of the corrosion-resistant layer is 5 µm to 20 µm,
so that the wear resistance and toughness of the flexible member may be improved.

In some embodiments, the thickness of the waterproof layer is 50 µm to 120 µm,
so that the waterproof layer may have certain structural strength, waterproof performance is improved, and the flexible member may be conveniently connected through hot pressing by using the waterproof layer.

In some embodiments, the thickness of the flexible member is 0.05 mm to 0.3 mm.
In this embodiment, by setting the thickness of the flexible member as 0.05 mm to 0.3 mm, the overall thickness of the heat exchange assembly is relatively small while the heat exchange assembly made of the flexible member has certain structural strength, which is beneficial to reducing the overall volume and weight of the battery device, so as to increase the energy density of the battery device.

In some embodiments, the thickness of the flexible member is 0.08 mm to 0.2 mm.

In this embodiment, by setting the thickness of the flexible member as 0.08 mm to 0.2 mm, the overall thickness of the heat exchange assembly is further reduced while the heat exchange assembly made of the flexible member has certain structural strength, which is beneficial to further reducing the overall volume and weight of the battery device, so as to further increase the energy density of the battery device.

In some embodiments, the elastic modulus of the flexible member is 0.1 MPa to 10000 MPa.

In this embodiment, by setting the elastic modulus of the flexible member as 0.1 MPa to 10000 MPa, the flexible member has certain structural strength, to improve the reliability of the heat exchange assembly, and has a certain deformation capability, which can improve the degree of fit between the heat exchange assembly and the housing and/or the battery cell assembly of a battery assembly, thereby increasing the effective heat exchange area between the heat exchange assembly and the housing and/or the battery cell assembly of the battery assembly, and improving the heat exchange efficiency and heat exchange performance of the heat exchange assembly.

In some embodiments, the battery device further comprises a bottom protection plate, where the bottom protection plate is arranged on a side of the heat exchange assembly away from the battery cell assembly.

The bottom protection plate is arranged on the side of the heat exchange assembly away from the battery cell assembly, which can protect the heat exchange assembly and the housing, reduce collisions of foreign objects against the housing during driving, to improve the reliability of the battery device.

In some embodiments, the rigid member is configured as a metal plate.

In this embodiment, the rigid member is configured as a metal plate, and the metal plate has both relatively good structural strength and relatively good heat conduction performance, in other words, while the heat exchange assembly has certain heat exchange efficiency, the rigid member can also provide a certain degree of support for the flexible member.

In some embodiments, the battery cell assembly comprises a plurality of battery cells, the medium flow channel comprises a plurality of sub-flow channels, each battery cell corresponds to the plurality of sub-flow channels, and the extension direction of the sub-flow channel corresponding to the battery cell is perpendicular to the length direction of the battery cell.

By enabling each battery cell to correspond to the plurality of sub-flow channels, it is beneficial to improving uniformity of the temperature of the battery cell.

In some embodiments, the flexible member is of a layered structure, the flexible member comprises a metal layer and a non-metal layer, the metal layer and the non-metal layer are sequentially stacked, and the non-metal layer is arranged on a side of the metal layer facing the rigid member.

Herein, by arranging the non-metal layer on the side of the metal layer facing the rigid member, the non-metal layer can be connected to the rigid member through hot pressing.

A second aspect of the embodiments of the present disclosure provides a heat exchange assembly, the heat exchange assembly is the heat exchange assembly of the battery device described above, and the heat exchange assembly is used to perform heat exchange with a battery cell assembly.

A third aspect of the embodiments of the present disclosure provides an energy storage device, comprising the battery device described above or the heat exchange assembly described above.

A fourth aspect of the embodiments of the present disclosure provides an electrical device, comprising the battery device described above, the heat exchange assembly described above, or the heat exchange assembly described above.

### BRIEF DESCRIPTION OF THE DRAWINGS

FIG. 1 is a schematic diagram of a structure of a vehicle according to an embodiment of the present disclosure;
FIG. 2 is an exploded perspective schematic diagram of a battery device according to an embodiment of the present disclosure;
FIG. 3 is an exploded perspective schematic diagram of a heat exchange assembly according to an embodiment of the present disclosure;
FIG. 4 is an exploded perspective schematic diagram of a flexible member according to an embodiment of the present disclosure;
FIG. 5 is an exploded perspective schematic diagram of a flexible member and a rigid member according to an embodiment of the present disclosure;
FIG. 6 is a schematic diagram of a partial structure of a heat exchange assembly according to an embodiment of the present disclosure; and
FIG. 7 is an exploded perspective schematic diagram of a flexible member, a support member, and a bottom protection plate according to an embodiment of the present disclosure.

### Description of numeral numbers

10. battery cell assembly; 11. battery cell; 20. housing; 21. housing body; 211. first housing portion; 212. second housing portion; 22. bottom protection plate; 23. accommodating cavity; 30. heat exchange assembly; 31. flexible member; 311. hot pressing region; 312. medium flow channel; 313. corrosion-resistant layer; 314. isolation layer; 315. waterproof layer; 32. rigid member; 33. support member; 34. connecting member; 100. battery apparatus; 200. controller; 300. motor; 1000. vehicle.

### DETAILED DESCRIPTION OF PREFERRED EMBODIMENTS

Unless otherwise specified, all implementations and optional implementations of the present disclosure may be combined with each other to form new technical solutions.

Unless otherwise specified, all technical features and optional technical features of the present disclosure can be combined with each other to form new technical solutions.

With the development of clean energy, more and more devices use electric energy as driving energy, and consequently, power batteries, which can store more electric energy and be repeatedly charged and discharged, have been rapidly developed, such as lithium-ion batteries. Power batteries are used not only in energy storage power systems such as hydropower, thermal power, wind power, and solar power plants, but also in electric transportation such as electric bicycles, electric motorcycles, and electric vehicles, aerospace, and many other fields.

In the embodiments of the present disclosure, a battery cell may be a secondary battery. The secondary battery is a battery cell that may be continuously used by activating an active material by means of charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the embodiments of the present disclosure.

The battery cell generally includes an electrode assembly. The electrode assembly includes a positive electrode, a negative electrode, and a spacer arranged between the positive electrode and the negative electrode. During charging and discharging of the battery cell, intercalation/de-intercalation of active ions (e.g., lithium ions) are enabled at the positive electrode and negative electrode by moving the active ions between the positive electrode and negative electrode. The spacer is arranged between the positive electrode and the negative electrode to prevent the positive and negative electrodes from being short-circuited and to allow active ions to pass therethrough.

The electrode assembly may be of a wound structure, a stacked structure, or a hybrid structure of winding and stacking.

In some implementations, the electrode assembly is a wound structure. The positive plate and the negative plate are wound in a winding structure.

In some implementations, the electrode assembly is a laminated structure.

As an example, a plurality of positive plates and a plurality of negative plates may be respectively provided, and are alternately laminated.

As an example, a plurality of positive plates may be provided, the negative plate may be folded to form a plurality of laminated folding sections, and one positive plate is sandwiched between adjacent folding sections.

As an example, the positive plate and negative plate are both folded to form a plurality of laminated folding sections.

As an example, a plurality of spacers may be provided, between any adjacent positive plates or negative plates respectively.

As an example, the spacer may be continuously provided between any adjacent positive plates or negative plates by folding or winding.

In some embodiments, the electrode assembly may have a cylindrical shape, a flat shape, a polygonal column shape, or the like.

In some implementations, the electrode assembly is provided with a tab that may conduct current from the electrode assembly. The tab comprises a positive tab and a negative tab.

In some implementations, the battery cell may include a casing. The housing may be a steel casing, an aluminum casing, a plastic casing (e.g., polypropylene), a composite metal casing (e.g., a copper-aluminum composite casing), an aluminum plastic film, or the like. In some embodiments, the casing may be of a sealed structure, or may be of a non-sealed structure. As an example, when the casing is of a non-sealed structure, the casing plays a role of protecting the electrode assembly. A sealing bag is further included between the casing and the electrode assembly, and the sealing bag is used to package the electrode assembly and an electrolyte. Specifically, the sealing bag may be a bag-shaped insulating member or an aluminum plastic film. When the casing is of a sealed structure, the casing is used to package components such as the electrode assembly and the electrolyte.

As an example, the battery cell may be a cylindrical battery cell, a prismatic battery cell, a pouch battery cell, or another shaped battery cell, and the prismatic battery cell includes a square-shell battery cell, a blade-shaped battery cell, and a multi-prism battery cell, for example, a hexagonal battery cell, and the like, and the present disclosure is not particularly limited.

In some implementations, the casing includes an end cover and a casing body. The casing body is provided with an opening, and the end cover covers the opening. The casing body may be provided with one or more openings. One or more end caps may also be provided.

In some implementations, the casing is provided with at least one electrode terminal thereon, which is electrically connected to a tab. The electrode terminal may be directly connected to the tab, or may be indirectly connected to the tab through a current collecting member. The electrode terminal may be disposed on the end cap, or may be disposed on the casing body.

In some embodiments, an energy storage device includes an energy storage container, an energy storage cabinet, and the like.

A power station has an increasing requirement for the area energy density of the energy storage container, and therefore, in order to increase the electric energy capacity, the weight of the container will also increase accordingly. The container needs to be transported from a production site to a use site by land and/or sea, and generally, there is a transport weight limit in land and sea, so that improvement of the energy density is contradictory to the weight of the energy storage container.

During the use of a battery device, battery cells in the battery device may generate heat. If the heat is excessively high, the performance and service life of the battery device will be adversely affected. Therefore, how to reduce the weight of a heat exchange assembly while effectively dissipating heat from the battery cells of the battery device has become an important research direction in the art. In the related art, a cooling system is arranged in a battery device housing to cool the battery cells in the battery device. The cooling system may include a plurality of aluminum water-cooling plates laid in the battery device housing, and surfaces of the plurality of water-cooling plates are in contact with surfaces of the battery cells in the battery device. During use, a heat exchange medium such as water flows through the plurality of water-cooling plates, thereby taking away heat from the battery cells and cooling the battery cells, however, the aluminum water-cooling plates in the cooling system have a problem of heavy weight.

In view of this, in order to reduce the weight of a heat exchange assembly, the embodiments of the present disclosure provide a battery device, and the battery device includes a housing, a battery cell assembly, and a heat exchange assembly. The battery cell assembly is arranged in the housing. The heat exchange assembly includes at least two heat exchange members. At least one heat exchange member is configured as a flexible member. The at least two heat exchange members are stacked, and at least one medium flow channel is formed between the heat exchange members. The at least one medium flow channel is used to conduct a heat exchange medium. The heat exchange medium is used to perform heat exchange with the battery cell assembly.

The battery device provided in the embodiments of the present disclosure includes the housing, the battery cell assembly, and the heat exchange assembly, the battery cell assembly is arranged in the housing, and the housing protects the battery cell assembly. The heat exchange assembly is used to perform heat exchange with the battery cell assembly. The heat exchange assembly includes the flexible member. The mass of the flexible member is relatively light, thereby reducing the mass of the heat exchange assembly, reducing the production cost of the heat exchange assembly, and reducing the mass of the battery device. In addition, by configuring the heat exchange assembly to include a flexible structure, the heat exchange assembly can be better fitted to the housing and/or the battery cell assembly, which is beneficial to absorbing an assembly tolerance of the heat exchange assembly without using a sealant or a thermally conductive material, the degree of fit between the heat exchange assembly and the housing and/or the battery cell assembly is improved, and the effective heat exchange area between the heat exchange assembly and the housing and/or the battery cell assembly is increased, thereby improving the heat exchange efficiency and heat exchange performance of the heat exchange assembly.

The technical solutions described in the embodiments of the present disclosure are applicable to an electrical device using a battery device. The electrical device includes the battery device according to any embodiment of the present disclosure, and the battery device is used to provide electric energy.

The electric device may be a vehicle, a mobile phone, a portable device, a notebook computer, a ship, a spacecraft, an electric toy, an electric tool, and the like. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like. In the embodiments of the present disclosure, the above described electrical device is not particularly limited.

It should be noted that the technical solutions described in the embodiments of the present disclosure are not limited to the battery device described above, but may be applied to all electrical devices and energy storage devices including a battery device, but for brevity of description, the following embodiments are described by using an electric vehicle as an example.

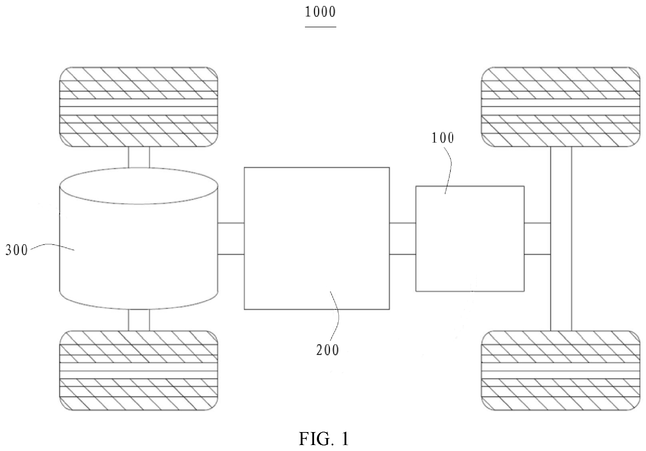

Referring to FIG. 1, a controller 200, a motor 300, and a battery device 100 may be arranged in a vehicle 1000. The controller 200 is used to control the battery device 100 to supply power to the motor 300. For example, the battery device 100 may be arranged at a bottom, head, or tail of the vehicle 1000. The battery device 100 may be used to supply power to the vehicle 1000. For example, the battery device 100 may be used as an operating power source of the vehicle 1000, for a circuit system of the vehicle 1000, such as for operating power requirements for starting, navigation, and running of the vehicle 1000. In another embodiment of the present disclosure, the battery device 100 may be used not only as the operating power source of the vehicle 1000, but also as a driving power source of the vehicle 1000, replacing or partially replacing fuel or natural gas to provide driving power to the vehicle 1000.

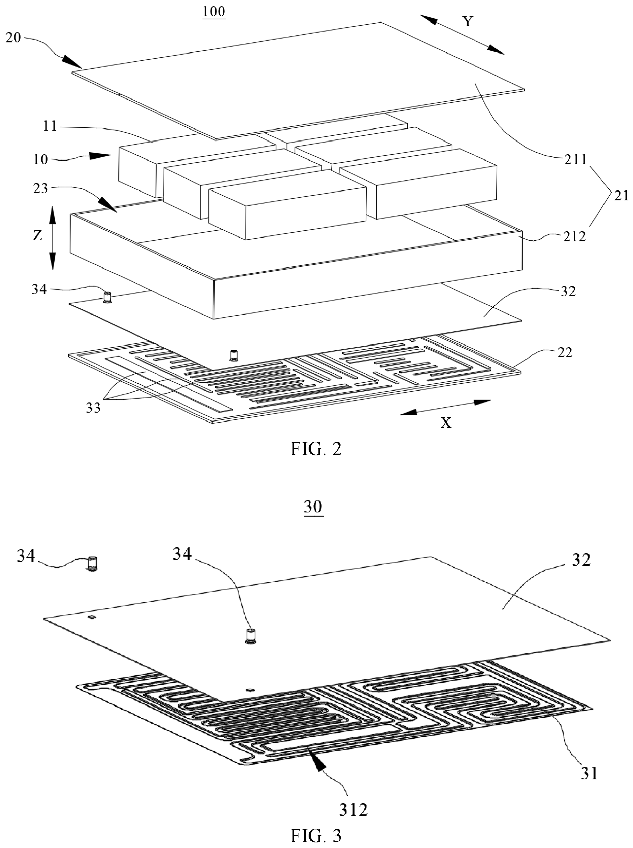

Referring to FIG. 2, to satisfy different power usage requirements, the battery device 100 includes a battery cell assembly 10, the battery cell assembly 10 may include a plurality of battery cells 11, and the battery cell 11 is a minimum unit forming a module or a pack of the battery device 100. The plurality of battery cells 11 may be connected in series, in parallel, or in a combination of both, and "in a combination of both" means that the plurality of battery cells 11 are connected both in series and in parallel. The plurality of battery cells 11 may be directly connected in series, in parallel, or in a combination of both, and the whole of the plurality of battery cells 11 is accommodated in the housing 20. Certainly, the battery device 100 may be alternatively in a form in which modules of the battery device 100 are formed by connecting the plurality of battery cells 11 in series, in parallel, or in a combination of both, and then the plurality of modules of the battery device 100 are connected in series, parallel, or series-parallel connection to form an integral whole, and accommodated in the housing 20. The battery device 100 may further include other structures. For example, the battery device 100 may further include a busbar component for implementing an electrical connection between the plurality of battery cells 11. Herein, each battery cell 11 may be a secondary battery device 100 or a primary battery device 100, or may be a lithium-sulfur battery device 100, a sodium-ion battery device 100, or a magnesium-ion battery device 100, but is not limited thereto. The battery cell 11 may be in a shape of a cylinder, a flat body, a cuboid, or in other shapes.

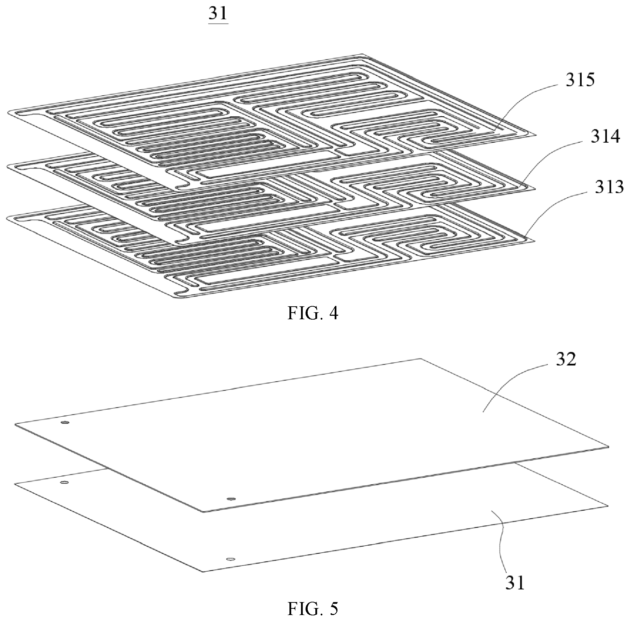

Referring to FIG. 1 to FIG. 7, the embodiments of the present disclosure provide a battery device 100, including a housing 20, a battery cell assembly 10, and a heat exchange assembly 30. The battery cell assembly 10 is arranged in the housing 20. The heat exchange assembly 30 includes at least two heat exchange members. At least one of the heat exchange members is configured as a flexible member 31. The at least two heat exchange members are stacked, and at least one medium flow channel 312 is formed between the heat exchange members. The at least one medium flow channel 312 is used to conduct a heat exchange medium. The heat exchange medium is used to perform heat exchange with the battery cell assembly 10.

Referring to FIG. 2, the battery device 100 includes the housing 20 and the battery cell assembly 10, the battery cell assembly 10 includes at least one battery cell 11, and the battery cell 11 is arranged in the housing 20.

The housing 20 may be a simple three-dimensional structure such as a single cuboid, a cylinder, or a sphere, or may be a complex three-dimensional structure formed by combining simple three-dimensional structures such as cuboids, cylinders, or spheres. The material of the housing 20 may be an alloy material such as an aluminum alloy or an iron alloy, a polymer material such as polycarbonate or polyisocyanurate foam, or a composite material such as glass fiber and epoxy resin.

The housing 20 is used to enclose the battery cell assembly 10, and the housing 20 can prevent liquids or other foreign objects from affecting charging or discharging of the battery cell assembly 10.

For example, the housing 20 is generally a rectangular parallelepiped structure, both the length direction and the width direction of the housing 20 are parallel to a horizontal plane, and the length direction of the housing 20 is parallel to the longest side of the rectangular parallelepiped structure of the housing 20. The height direction of the housing 20 is perpendicular to the ground. For example, as shown in FIG. 2, the length direction of the housing 20 is represented by X, the width direction of the housing 20 is represented by Y, and the height direction of the housing 20 is represented by Z.

The embodiments of the present disclosure provide a heat exchange assembly 30. The heat exchange assembly 30 includes at least two heat exchange members. At least one of the heat exchange members is configured as a flexible member 31. The at least two heat exchange members are stacked, and at least one medium flow channel 312 is formed between the heat exchange members. The at least one medium flow channel 312 is used to conduct a heat exchange medium. The heat exchange medium is used to perform heat exchange with a battery cell assembly 10.

Herein, flexibility in the flexible member 31 refers to a material property of a structure, and the type of property may be a property imparted to a material due to the relatively light mass of the material, or may be a property imparted to the material due to at least any one property of the thickness, rigidity, strength, elastic modulus, and the like of the material. As an example, the material of the flexible member 31 may be selected as a material having a lighter mass than a conventional aluminum plate, steel plate, or the like, and the flexibility thereof may be controlled by using the thickness, width, length, and type of the material of the flexible member 31, and in the embodiments of the present disclosure, by configuring the heat exchange assembly 30 as the form of the flexible member 31, it is beneficial to reducing the weight of the heat exchange assembly 30.

The at least one medium flow channel 312 is formed between the heat exchange member and a rigid member, which means that the heat exchange assembly 30 forms the medium flow channel 312 between the heat exchange member and the rigid member. The heat exchange medium circulates in the medium flow channel 312 to perform heat exchange with the battery cell assembly 10.

It should be noted that a specific type of the heat exchange medium is not limited herein, as long as the heat exchange medium can cool the battery cell 11, for example, the heat exchange medium may be gaseous or liquid. In the embodiments of the present disclosure, the heat exchange medium is a cooling liquid as an example for description.

It should be noted that the specific number of the medium flow channels 312 is not limited herein. The number may be one or more.

"A plurality of" in the embodiments of the present disclosure refers to two or more.

The heat exchange assembly 30 includes the at least two heat exchange members, that is, there are a plurality of heat exchange members.

At least one of the heat exchange members is configured as the flexible member 31, which means that all the heat exchange members may be configured as the flexible members 31, or some of the heat exchange members may be configured as the flexible members 31, and the other heat exchange members are non-flexible members.

A principle of performing heat exchange by the heat exchange assembly 30 on the battery cell assembly 10 is as follows: The heat exchange medium output by a heat exchange medium source (not shown in the figure) enters the medium flow channel 312 through an inlet of the heat exchange assembly 30, and after the heat exchange medium performs heat exchange with the battery cell assembly 10, the heat exchange medium flows out through an outlet of the heat exchange assembly 30 to complete heat exchange on the battery cell assembly 10.

Herein, performing heat exchange on the battery cell assembly 10 by the heat exchange assembly 30 may be performing heat dissipation on the battery cell assembly 10, or may be performing heating on the battery cell assembly 10.

A principle of performing heat dissipation by the heat exchange assembly 30 on the battery cell assembly 10 is as follows: The heat exchange medium output by the heat exchange medium source enters the medium flow channel 312 through the inlet of the heat exchange assembly 30, and after the heat exchange medium absorbs heat generated during operation of the battery cell assembly 10, the heat exchange medium flows out through the outlet of the heat exchange assembly 30 to release the heat, thereby completing cooling and heat dissipation on the battery cell assembly 10.

A principle of performing heating by the heat exchange assembly 30 on the battery cell assembly 10 is as follows: The heat exchange medium output by the heat exchange medium source enters the medium flow channel 312 through the inlet of the heat exchange assembly 30, and after the heat exchange medium transfers heat to the battery cell assembly 10 to perform heating on the battery cell assembly 10, the heat exchange medium flows out through the outlet of the heat exchange assembly 30 to complete heating on the battery cell assembly 10.

The flexible member 31 is configured as a flexible structure, and the flexible member 31 has a certain expandable or shrinkable property, which can also be understood as that the flexible member 31 may be of an elastically deformable structure, and the flexible member 31 has a capability to deform and recover deformation, so that the heat exchange assembly 30 can be formed into a contoured structure, and the heat exchange assembly 30 can be better fitted to an external contour shape of the battery cell 11 or another component to improve the degree of fit between the heat exchange assembly 30 and the housing 20 and/or the battery cell assembly 10, thereby increasing the effective heat exchange area between the heat exchange assembly 30 and the housing 20 and/or the battery cell assembly 10, and further improving heat exchange efficiency.

It should be noted that the flexible member 31 may have electrical conductivity, which is beneficial to maintaining an equipotential configuration with the housing 20. The flexible member 31 may also have an electrical insulation property, and no insulation processing is required, which is beneficial to reducing the risk of electric leakage and production cost of the battery device 100, thereby improving the reliability of the battery device 100.

The battery device 100 provided in the embodiment of the present disclosure includes a housing 20, a battery cell assembly 10 and a heat exchange assembly 30, the battery cell assembly 10 is arranged in the housing 20, and the housing 20 protects the battery cell assembly 10. The heat exchange assembly 30 is used to perform heat exchange with the battery cell assembly 10. The heat exchange assembly 30 includes a flexible member 31, and the mass of the flexible member 31 is relatively light, which is beneficial to reducing the mass of the heat exchange assembly 30, reducing the production cost of the heat exchange assembly 30, and reducing the mass of the battery device 100. In addition, by configuring the heat exchange assembly 30 to include a flexible structure, the heat exchange assembly 30 can be better fitted to the housing 20 and/or the battery cell assembly 10, which is beneficial to absorbing an assembly tolerance of the heat exchange assembly 30 without using a sealant or a thermally conductive material, the degree of fit between the heat exchange assembly 30 and the housing 20 and/or the battery cell assembly 10 is improved, and the effective heat exchange area between the heat exchange assembly 30 and the housing 20 and/or the battery cell assembly 10 is increased, thereby improving the heat exchange efficiency and heat exchange performance of the heat exchange assembly 30.

In some embodiments, at least one heat exchange member is configured as a rigid member 32, and the flexible member 31 and the rigid member 32 are stacked to form a medium flow channel 312.

The rigid member 32 is of a rigid plate-shaped structure, and can support the flexible member 31, thereby helping improve the overall structural strength and stability of the heat exchange assembly 30.

Herein, rigidity in the rigid member 32 refers to a material property of a structure, and the type of property may be a property imparted to a material due to the relatively light mass of the material, or may be a property imparted to the material due to at least any one property of the thickness, rigidity, strength, elastic modulus, and the like of the material. As an example, the material of the rigid member 32 may be selected as a material similar to a conventional aluminum plate, steel plate, or other structures, and the rigidity thereof may be controlled by using the thickness, width, length, and type of the material of the rigid member 32, and in the embodiments of the present disclosure, by configuring at least one of the heat exchange members of the heat exchange assembly 30 as the form of the rigid member 32, it is beneficial to supporting the flexible member 31.

For example, the number of the heat exchange members is two, one of which is the flexible member 31, and the other is the rigid member 32, and the flexible member 31 and the rigid member 32 are stacked to form the medium flow channel 312.

For example, the rigid member 32 may be further stamped or welded to a specific structure for a function such as support based on a requirement.

For example, the heat exchange assembly 30 further includes an inlet and an outlet, and both the inlet and the outlet are in communication with the medium flow channel 312.

Herein, the inlet and the outlet of the heat exchange assembly 30 are used to be connected to a pipeline of a liquid storage device such as an air conditioning system or a water tank of a vehicle or an electrical device.

For example, the heat exchange assembly 30 further includes a connecting member 34 having an inlet and a connecting member 34 having an outlet, and the connecting member 34 is connected to the rigid member 32.

For example, the connecting member 34 is connected to the rigid member 32 by brazing.

Herein, at least one of the heat exchange members is configured as the rigid member 32, which means that one heat exchange member may be configured as the rigid member 32, or a plurality of heat exchange members may be configured as the rigid members 32. In the embodiment in which the plurality of heat exchange members are configured as the rigid members 32, the rigid members 32 may be the same or different.

Herein, by configuring at least one of the heat exchange members as the rigid member 32, the rigid member 32 can support the flexible member 31, which is beneficial to improving the structural strength and stability of the heat exchange assembly 30, and further improving the heat exchange efficiency and heat exchange performance of the heat exchange assembly 30.

It should be noted that a specific configuration position of the heat exchange assembly 30 is not limited herein.

For example, in some embodiments, referring to FIG. 2, the housing 20 and the heat exchange assembly 30 are enclosed to form an accommodating cavity 23, and the battery cell assembly 10 is arranged in the accommodating cavity 23.

Herein, the flexible member 31 may be arranged on a side of the rigid member 32 facing the battery cell assembly 10, or may be arranged on a side of the rigid member 32 away from the battery cell assembly 10.

That is, the heat exchange assembly 30 forms a part of a wall of the accommodating cavity 23. In this way, it is beneficial to reducing materials used by the housing 20, and further beneficial to reducing the weight of the heat exchange assembly 30 and reducing the cost. In addition, the heat exchange assembly 30 can be in direct contact with the battery cell assembly 10, thereby further improving the heat exchange efficiency between the heat exchange assembly 30 and the battery cell assembly 10.

For example, the rigid member 32 is connected to the housing 20 by welding or screwing.

In some other embodiments, the heat exchange assembly 30 may be arranged in the housing 20, that is, may be in direct contact with the battery cell assembly 10. Alternatively, the heat exchange assembly 30 may be arranged outside the housing 20, that is, the housing 20 is arranged with the accommodating cavity 23, and the heat exchange assembly 30 is arranged outside the accommodating cavity 23, and heat is transferred through an intermediate medium, so as to implement heat exchange between the heat exchange assembly 30 and the battery cell assembly 10.

That is, at least a part of the heat exchange assembly 30 is arranged outside the housing 20 to separate the heat exchange assembly 30 from the battery cell assembly 10.

The housing 20 is used to accommodate the battery cell assembly 10, and the housing 20 may have various structures. In some embodiments, referring to FIG. 2 again, the housing 20 includes a housing body 21. The housing body 21 may include a first housing portion 211 and a second housing portion 212. The first housing portion 211 and the second housing portion 212 cover each other, and the first housing portion 211, the second housing portion 212, and the heat exchange assembly 30 jointly define an accommodating space for accommodating the battery cell assembly 10.

For example, the second housing portion 212 may be of a frame structure with openings at both ends, the first housing portion 211 is a plate-shaped structure, the first housing portion 211 covers an opening at one end of the second housing portion 212, and the heat exchange assembly 30 is arranged on an opening at the other end of the second housing portion 212 to form the accommodating cavity 23.

The first housing portion 211 and the second housing portion 212 may each be of hollow structures with an opening at one side. An opening side of the first housing portion 211 covers an opening side of the second housing portion 212 to form the housing body 21 having the accommodation space. Certainly, the first housing portion 211 and second housing portion 212 may be in various shapes such as cylinder, cuboid, or the like.

To increase sealing performance after the first housing portion 211 and the second housing portion 212 are connected, a sealing member, for example, a sealant or a sealing ring or the like may be arranged between the first housing portion 211 and the second housing portion 212.

Assuming that the first housing portion 211 covers the top of the second housing portion 212, the first housing portion 211 may also be referred to as an upper housing cover, and the second housing portion 212 may also be referred to as a lower housing cover.

For example, referring to FIG. 2 again, the battery device 100 further includes a bottom protection plate 22, and the bottom protection plate 22 is arranged on a side of the heat exchange assembly 30 away from the battery cell assembly 10.

Herein, the bottom protection plate 22 is arranged on the side of the heat exchange assembly 30 away from the battery cell assembly 10, which can protect the heat exchange assembly 30 and the housing 20, reduce collisions of foreign objects against the housing 20 during driving, to improve the reliability of the battery device 100.

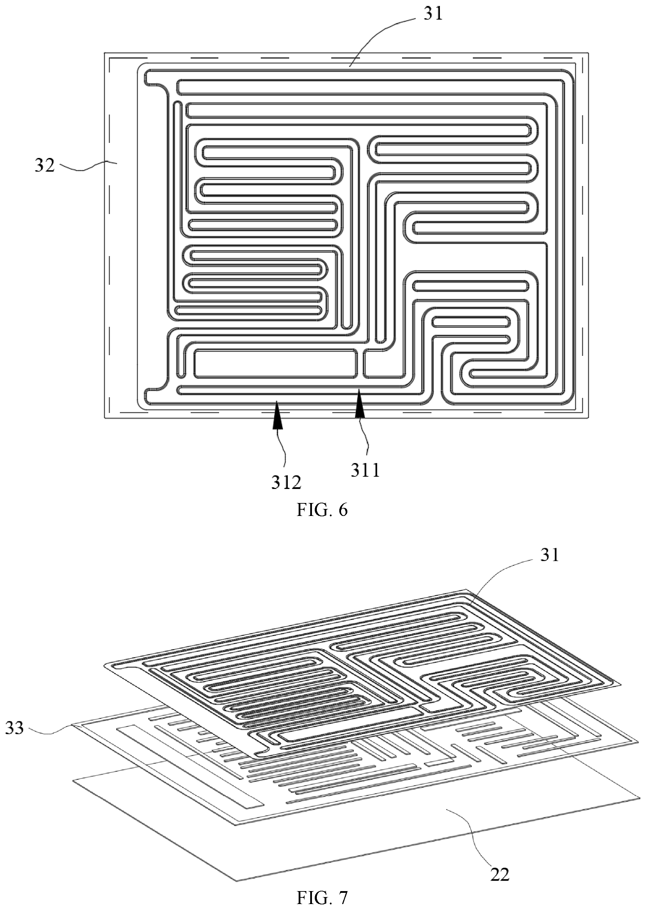

In some embodiments, referring to FIG. 6 and FIG. 7, the flexible member 31 and the rigid member 32 form a hot pressing region 311 and a medium flow channel 312 through hot pressing, and the flexible member 31 and the rigid member 32 are connected to each other in at least a partial region of the hot pressing region 311.

In other words, the flexible member 31 and the rigid member 32 are connected through hot pressing, and the hot pressing region 311 and the medium flow channel 312 are formed through hot pressing, and a flow channel region is used to conduct the medium flow channel 312. The forming method is simple.

Herein, the flexible member 31 is sealed by using a hot pressing process, and the hot pressing process can effectively ensure that the heat exchange assembly 30 has good sealability and is not easy to crack.

In this embodiment, the flexible member 31 is sealed by using the hot pressing process, to be specific, the hot pressing region 311 is formed through hot pressing, and the hot pressing region 311 divides the heat exchange assembly 30 to form at least one medium flow channel 312. The forming method is simple.

For example, the hot pressing region 311 includes a heat sealing region and a non-heat sealing region, and the non-heat sealing region and the medium flow channel 312 are respectively located on two sides of the heat sealing region, which is beneficial to reducing the width of the heat sealing region, and mitigating a problem that hot pressing quality is affected and the flexible member 31 is damaged due to the excessive temperature caused by the excessively wide heat sealing region. In addition, the non-heat sealing region may also form a buffer region for stress release when the flexible member 31 is folded, thereby alleviating a situation that the heat sealing region is damaged due to stress concentration generated in the heat sealing region.

In the related art, a heat exchange assembly is formed by welding high-strength aluminum alloys, and the high-strength aluminum alloys (5-series, 6-series, and the like) have a large alloy content, so alloy elements precipitate during welding, which affects welding quality.

However, in the embodiments of the present disclosure, the heat exchange assembly 30 is configured to include the flexible member 31 and the rigid member 32, the flexible member 31 and the rigid member 32 form the hot pressing region 311 and the medium flow channel 312 through hot pressing, a hot-pressing temperature (150 °C±10 °C) is lower than a brazing temperature in the related art, and alloying elements are not precipitated, which is beneficial to further improving the structural strength of the heat exchange assembly 30.

In some embodiments, referring to FIG. 2 and FIG. 7, the heat exchange assembly 30 further includes a support member 33, and the support member 33 is arranged in the hot pressing region 311 and is located on a side of the flexible member 31 away from the rigid member 32.

It should be noted that the specific number of the support members 33 is not limited herein. The support member 33 may be a single integral member, or may be a plurality of members.

The support member 33 is arranged in the hot pressing region 311, to be specific, the support member 33 supports the flexible member 31 by abutting against the hot pressing region 311.

In this embodiment, the support member 33 is arranged, and the support member 33 is arranged in the hot pressing region 311, so that the support member 33 may be used to support the flexible member 31, to improve the stability of the flexible member 31.

For example, the support member 33 is arranged on the side of the flexible member 31 away from the rigid member 32, so that the flexible member 31 abuts against the rigid member 32 by abutting the bottom protection plate 22 against the support member 33.

For example, the support member 33 may be a protective or thermal insulation substance such as foam.

It should be noted that a specific connection manner of the support member 33 is not limited herein.

In some embodiments, referring to FIG. 2 and FIG. 7, the heat exchange assembly 30 further includes an adhesive layer, and the support member 33 and the flexible member 31 are bonded by using the adhesive layer.

Herein, the adhesive layer is formed by, for example, a double-sided adhesive or a self-adhesive bonded between the support member 33 and the flexible member 31.

In this embodiment, the support member 33 and the flexible member 31 are bonded by using the adhesive layer, and the connection manner is simple.

In some other embodiments, the support member 33 may alternatively be bonded or welded to the bottom protection plate 22 by using the adhesive layer, or the support member 33 may alternatively be of an integrated structure with the bottom protection plate 22.

In some embodiments, referring to FIG. 2 to FIG. 4, the flexible member 31 is configured as a metal-plasticized film.

The flexible member 31 is a single-layer or multi-layer film.

Herein, the metal-plasticized film is a metal-plastic composite material, that is, includes a metal layer and a plastic layer.

In this embodiment, since the metal-plasticized film is thin and has a small weight, and the medium flow channel 312 is formed between the metal-plasticized film and the heat exchange member, which is not affected by an extrusion process and does not need to satisfy a requirement of a large thickness, so that the overall thickness and weight of the heat exchange assembly 30 can be reduced. Meanwhile, since the heat exchange assembly 30 has an insulation property, a risk of insulation failure can be reduced. A risk of reaction between the heat exchange assembly 30 and the heat exchange medium flowing inside is reduced, and a risk of corrosion and leakage of the heat exchange medium is further reduced.

For example, the flexible member 31 is configured as an aluminum-plasticized film.

The aluminum-plasticized film has properties of high barrier, good cold pressing formability, puncture resistance, electrolyte solution stability resistance, and electrical insulation.

In some embodiments, the flexible member 31 is of a layered structure, the flexible member 31 includes a metal layer and a non-metal layer, and the metal layer and the non-metal layer are sequentially stacked.

Herein, the flexible member 31 includes a metal layer and a non-metal layer, namely, a composite material member formed by the metal layer and the non-metal layer.

For example, the metal layer and the non-metal layer may be formed through hot pressing or hot melting.

Herein, the number of the metal layers and the number of the non-metal layers are not limited.

In this embodiment, the flexible member 31 arranged by sequentially stacking the metal layer and the non-metal layer has a small thickness and a small weight, and by forming the medium flow channel 312 between at least two flexible members 31, which is not affected by an extrusion process and does not need to satisfy a requirement of a large thickness, so the overall thickness and weight of the heat exchange assembly 30 can be reduced. In addition, the heat exchange assembly 30 does not react with the heat exchange medium flowing inside, so there is no risk of corrosion and leakage.

In some embodiments, the flexible member 31 is of a layered structure, the flexible member 31 includes a metal layer and a non-metal layer, and the metal layer and the non-metal layer are sequentially stacked, where the non-metal layer is arranged on a side of the metal layer facing the rigid member 32.

In other words, the non-metal layer is located between the metal layer and the rigid member 32.

Herein, by arranging the non-metal layer on the side of the metal layer facing the rigid member 32, the non-metal layer can be connected to the rigid member 32 through hot pressing.

In some embodiments, the metal layer includes one or more of an aluminum foil, a copper foil, and a steel foil.

By configuring the metal layer as one or more of an aluminum foil, a copper foil and a steel foil, the flexible member 31 may have certain structural strength and may have an isolation function.

In some embodiments, the non-metal layer includes one or more of polypropylene, polyvinyl chloride, and polyethylene.

By configuring the non-metal layer as one or more of polypropylene, polyvinyl chloride, and polyethylene, the flexible member 31 may have a certain waterproof function.

For example, a non-metal layer of a corrosion-resistant material having acid and alkali corrosion resistance may be selected; alternatively, additives may be added to the non-metal layer to enable the non-metal layer to have acid and alkali corrosion resistance.

In some embodiments, the non-metal layer is a hot-melt layer.

Herein, the non-metal layer is configured as a hot-melt layer, that is, the non-metal layer is made of a hot-melt material, which is beneficial to compounding the non-metal layer and the metal layer together through hot melting, molding is simple, and production efficiency is high.

In some embodiments, the flexible member 31 is of a layered structure, the flexible member 31 includes a corrosion-resistant layer 313, an isolation layer 314, and a waterproof layer 315 that are sequentially arranged, and the waterproof layer 315 is closer to the medium flow channel 312 than the corrosion-resistant layer 313.

Herein, the corrosion-resistant layer 313 may be a nylon layer formed by a nylon material, so as to have certain corrosion-resistant performance, for example, acid and alkali corrosion resistance.

The isolation layer 314 may be a metal layer, and the metal layer may be configured as one or more of an aluminum foil, a copper foil, and a steel foil, so that the flexible member 31 has certain structural strength and may have an isolation function.

The waterproof layer 315 may be a non-metal layer, and the non-metal layer may be configured as one or more of polypropylene, polyvinyl chloride, and polyethylene, so that the flexible member 31 has a certain waterproof function.

In this embodiment, the flexible member 31 is configured to include the corrosion-resistant layer 313, the isolation layer 314, and the waterproof layer 315 that are sequentially arranged, and the waterproof layer 315 is closer to the medium flow channel 312 than the corrosion-resistant layer 313, which is beneficial to improving the reliability of the heat exchange assembly 30.

In some embodiments, the thickness of the isolation layer 314 is 6.5 µm to 100 µm.

The thickness of the isolation layer 314 may be a point value of any one of the following, or a point value between any two of the following: 6.5 µm, 10 µm, 15 µm, 20 µm, 25 µm, 30 µm, 35 µm, 38 µm, 40 µm, 45 µm, 50 µm, 55 µm, 60 µm, 65 µm, 70 µm, 75 µm, 80 µm, 85 µm, 90 µm, 92 µm, 95 µm, or 100 µm.

In this embodiment, by setting the thickness of the isolation layer 314 as 6.5 µm to 100 µm, the flexible member 31 may have certain structural strength and flexibility.

In some embodiments, the thickness of the isolation layer 314 is 6.5 µm to 15 µm.

The thickness of the isolation layer 314 may be a point value of any one of the following, or a point value between any two of the following: 6.5 µm, 7 µm, 7.5 µm, 7.8 µm, 8 µm, 8.3 µm, 8.5 µm, 8.8 µm, 9 µm, 9.2 µm, 9.5 µm, 9.7 µm, 10 µm, 10.3 µm, 10.5 µm, 10.8 µm, 11 µm, 11.5 µm, 11.8 µm, 12 µm, 12.3 µm, 12.5 µm, 13 µm, 13.5 µm, 14 µm, 14.5 µm, or 15 µm.

In this embodiment, by setting the thickness of the isolation layer 314 as 6.5 µm to 15 µm, the flexible member 31 may further have certain structural strength and flexibility.

In some embodiments, the thickness of the corrosion-resistant layer 313 is 5 µm to 20 µm.

The thickness of the corrosion-resistant layer 313 may be a point value of any one of the following, or a point value between any two of the following: 5 µm, 5.5 µm, 5.8 µm, 6 µm, 6.5 µm, 7 µm, 7.5 µm, 7.8 µm, 8 µm, 8.3 µm, 8.5 µm, 8.8 µm, 9 µm, 9.2 µm, 9.5 µm, 9.7 µm, 10 µm, 10.3 µm, 10.5 µm, 10.8 µm, 11 µm, 11.5 µm, 11.8 µm, 12 µm, 12.3 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 18.7 µm, 19 µm, 19.5 µm, or 20 µm.

In this embodiment, by setting the thickness of the corrosion-resistant layer 313 as 5 µm to 20 µm, the wear resistance and toughness of the flexible member 31 may be improved.

In some embodiments, the thickness of the waterproof layer 315 is 50 µm to 120 µm.

The thickness of the waterproof layer 315 may be a point value of any one of the following, or a point value between any two of the following: 50 µm, 55 µm, 60 µm, 65 µm, 70 µm, 75 µm, 80 µm, 85 µm, 90 µm, 92 µm, 95 µm, 100 µm, 105 µm, 108 µm, 110 µm, 115 µm, or 120 µm.

In this embodiment, by setting the thickness of the waterproof layer 315 as 50 µm to 120 µm, the waterproof layer 315 may have certain structural strength, waterproof performance is improved, and the flexible member 31 may be conveniently connected through hot pressing by using the waterproof layer 315.

In some embodiments, referring to FIG. 2 to FIG. 4, the thickness of the flexible member 31 is 0.05 mm to 0.3 mm.

For example, the thickness of the flexible member 31 is a point value of any one of the following, or a point value between any two of the following: 0.05 mm, 0.06 mm, 0.07 mm, 0.08 mm, 0.09 mm, 0.1 mm, 0.15 mm, 0.2 mm, 0.21 mm, 0.22 mm, 0.25 mm, 0.27 mm, 0.28 mm, or 0.3 mm.

In this embodiment, by setting the thickness of the flexible member 31 as 0.05 mm to 0.3 mm, the overall thickness of the heat exchange assembly 30 is relatively small while the heat exchange assembly 30 made of the flexible member 31 has certain structural strength, which is beneficial to reducing the overall volume and weight of the battery device 100, so as to increase the energy density of the battery device 100.

In some embodiments, referring to FIG. 2 to FIG. 4, the thickness of the flexible member 31 is 0.08 mm to 0.2 mm.

For example, the thickness of the flexible member 31 is a point value of any one of the following, or a point value between any two of the following: 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm.

In this embodiment, by setting the thickness of the flexible member 31 as 0.08 mm to 0.2 mm, the overall thickness of the heat exchange assembly 30 is further reduced while the heat exchange assembly 30 made of the flexible member 31 has certain structural strength, which is beneficial to further reducing the overall volume and weight of the battery device 100, so as to further increase the energy density of the battery device 100.

In some embodiments, the elastic modulus of the flexible member 31 is 0.1 MPa to 10000 MPa.

For example, the elastic modulus of the flexible member 31 may be a point value of any one of the following, or a point value between any two of the following: 0.1 MPa, 1 MPa, 50 MPa, 100 MPa, 150 MPa, 200 MPa, 300 MPa, 500 MPa, 800 MPa, 1000 MPa, 1300 MPa, 1500 MPa, 1800 MPa, 2000 MPa, 2500 MPa, 2800 MPa, 3000 MPa, 3500 MPa, 4000 MPa, 4500 MPa, 5000 MPa, 5500 MPa, 6000 MPa, 6500 MPa, 7000 MPa, 7500 MPa, 8000 MPa, 8500 MPa, 8800 MPa, 9000 MPa, 9500 MPa, 9700 MPa, or 10000 MPa.

The elastic modulus describes the magnitude of unit strain caused by unit stress when a solid is stressed within a certain range, and is one of the basic physical quantities of a material. The greater the elastic modulus, the greater the rigidity of the material and the greater the compression resistance. The elastic modulus is a physical quantity that describes the elasticity of a substance.

In this embodiment, by setting the elastic modulus of the flexible member 31 as 0.1 MPa to 10000 MPa, the flexible member 31 has certain structural strength, to improve the reliability of the heat exchange assembly 30, and has a certain deformation capability, which can improve the degree of fit between the heat exchange assembly 30 and the housing 20 and/or the battery cell assembly 10 of a battery assembly, thereby increasing the effective heat exchange area between the heat exchange assembly 30 and the housing 20 and/or the battery cell assembly 10 of the battery assembly, and improving the heat exchange efficiency and heat exchange performance of the heat exchange assembly 30.

It should be noted that a specific material of the rigid member 32 is not limited herein.

In some embodiments, the rigid member 32 is configured as a metal plate.

For example, the rigid member 32 may be configured as an aluminum alloy.

In this embodiment, the rigid member 32 is configured as a metal plate, and the metal plate has both relatively good structural strength and relatively good heat conduction performance, in other words, while the heat exchange assembly 30 has certain heat exchange efficiency, the rigid member 32 can also provide a certain degree of support for the flexible member 31.

In some embodiments, referring to FIG. 2 and FIG. 6, the battery cell assembly 10 includes a plurality of battery cells 11, the medium flow channel 312 includes a plurality of sub-flow channels, each battery cell 11 corresponds to the plurality of sub-flow channels, and the extension direction of the sub-flow channel corresponding to the battery cell 11 is perpendicular to the length direction of the battery cell 11.

The plurality of sub-flow channels are communicated to form the medium flow channel 312.

The extension direction of the sub-flow channel is perpendicular to the length direction of the battery cell 11, in other words, the plurality of sub-flow channels are arranged along the length direction of the battery cell 11, so that the length direction of the battery cell 11 may correspond to the plurality of sub-flow channels.

It can be understood that the temperature of the heat exchange medium gradually increases along the flow direction of the heat exchange medium, and thus, by enabling each battery cell 11 to correspond to the plurality of sub-flow channels, it is beneficial to improving uniformity of the temperature of the battery cell 11.

In a specific embodiment, referring to FIG. 2 to FIG. 7, the battery device 100 includes a housing 20, a battery cell assembly 10, and a heat exchange assembly 30. The heat exchange assembly 30 is arranged at the bottom of the housing 20, and the heat exchange assembly 30 and the housing 20 are enclosed to form an accommodating cavity 23. The battery cell assembly 10 is arranged in the accommodating cavity 23. The heat exchange assembly 30 includes a flexible member 31 and a rigid member 32, the flexible member 31 and the rigid member 32 are stacked, at least one medium flow channel 312 is formed between the flexible member 31 and the rigid member 32, the at least one medium flow channel 312 is used to conduct a heat exchange medium, and the heat exchange medium is used to perform heat exchange with the battery cell assembly 10. The flexible member 31 and the rigid member 32 form a hot pressing region 311 and the medium flow channel 312 through hot pressing, and the flexible member 31 and the rigid member 32 are connected to each other in at least a partial region of the hot pressing region 311. The heat exchange assembly 30 further includes a support member 33, and the support member 33 is arranged in the hot pressing region 311 and is located on a side of the flexible member 31 away from the rigid member 32. The heat exchange assembly 30 further includes an adhesive layer, and the support member 33 and the flexible member 31 are bonded by using the adhesive layer. The battery device 100 further includes a bottom protection plate 22, and the bottom protection plate 22 is arranged on a side of the heat exchange assembly 30 away from the battery cell assembly 10.

In a specific embodiment, the flexible member 31 is of a layered structure, the flexible member 31 includes a corrosion-resistant layer 313, an isolation layer 314 and a waterproof layer 315 that are sequentially arranged, and the waterproof layer 315 is closer to the medium flow channel 312 than the corrosion-resistant layer 313. The thickness of the isolation layer 314 is 6.5 µm to 15 µm. The thickness of the corrosion-resistant layer 313 is 5 µm to 20 µm. The thickness of the waterproof layer 315 is 50 µm to 120 µm. The thickness of the flexible member 31 is 0.05 mm to 0.3 mm. The elastic modulus of the flexible member 31 is 0.1 MPa to 10000 MPa.

A manner of measuring the elastic modulus of the flexible member 31 may include at least one of a static tensile test method, a dynamic test method, a sound velocity method, a nanoindentation method, and a bending method. A measuring instrument may include a nanoindenter and a universal testing machine.

For example, the elastic modulus of the flexible member 31 may be measured by using a nanoindentation method at normal temperature and normal pressure, and the nanoindentation method uses a micro indenter to perform indentation on a surface of the flexible member 31, and the elastic modulus is calculated by analyzing a relationship between the indentation depth and the load.

In the description in the present disclosure, the reference terms "in one embodiment", "in some embodiments", "in some other embodiments", "in still other embodiments", or "examples" and the like mean that specific features, structures, materials, or characteristics described in conjunction with the embodiment or example are included in at least one embodiment or example of the present disclosure. In the present disclosure, the schematic representations of the above terms are not necessarily directed to the same embodiment or example. Moreover, the described specific features, structures, materials, or characteristics may be combined in a suitable manner in any one or more embodiments or examples. In addition, a person skilled in the art can combine the different embodiments or examples described in this disclosure and the features of different embodiments or examples without conflicting with each other.

The above descriptions are merely preferable embodiments of the present disclosure, and are not intended to limit the present disclosure. For a person skilled in the art, various modifications and changes may be made to the present disclosure. Any modification, equivalent replacement, or improvement made without departing from the spirit and principle of the present disclosure shall fall within the protection scope of the present disclosure.

## Claims

1. A battery device, comprising:
a housing;
a battery cell assembly arranged in the housing; and
a heat exchange assembly, wherein the heat exchange assembly comprises at least two heat exchange members, at least one of the heat exchange members is configured as a flexible member, the at least two heat exchange members are stacked, and at least one medium flow channel is formed between the heat exchange members, wherein the at least one medium flow channel is used to conduct a heat exchange medium, and the heat exchange medium is used to perform heat exchange with the battery cell assembly.

2. The battery device according to claim 1, wherein at least one of the heat exchange members is configured as a rigid member, and the flexible member and the rigid member are stacked to form the medium flow channel.

3. The battery device according to claim 1 or 2, wherein the housing and the heat exchange assembly are enclosed to form an accommodating cavity, and the battery cell assembly is arranged in the accommodating cavity.

4. The battery device according to claim 2, wherein the flexible member and the rigid member form a hot pressing region and the medium flow channel through hot pressing, and the flexible member and the rigid member are connected to each other in at least a partial region of the hot pressing region.

5. The battery device according to claim 4, wherein the heat exchange assembly further comprises a support member, and the support member is arranged in the hot pressing region and is located on the side of the flexible member away from the rigid member.

6. The battery device according to claim 5, wherein the heat exchange assembly further comprises an adhesive layer, and the support member and the flexible member are bonded by using the adhesive layer.

7. The battery device according to any one of claims 1 to 6, wherein the flexible member is configured as a metal-plasticized film.

8. The battery device according to claim 7, wherein the flexible member is configured as an aluminum-plasticized film.

9. The battery device according to any one of claims 1 to 8, wherein the flexible member is of a layered structure, the flexible member comprises a metal layer and a non-metal layer, and the metal layer and the non-metal layer are sequentially stacked.

10. The battery device according to claim 9, wherein the metal layer comprises one or more of an aluminum foil, a copper foil, and a steel foil.

11. The battery device according to claim 9 or 10, wherein the non-metal layer comprises one or more of polypropylene, polyvinyl chloride, and polyethylene.

12. The battery device according to any one of claims 9 to 11, wherein the non-metal layer is a hot-melt layer.

13. The battery device according to any one of claims 1 to 6, wherein the flexible member is of a layered structure, the flexible member comprises a corrosion-resistant layer, an isolation layer, and a waterproof layer that are sequentially arranged, and the waterproof layer is closer to the medium flow channel than the corrosion-resistant layer.

14. The battery device according to claim 13, wherein the thickness of the isolation layer is 6.5 µm to 100 µm.

15. The battery device according to claim 14, wherein the thickness of the isolation layer is 6.5 µm to 15 µm.

16. The battery device according to claim 14 or 15, wherein the thickness of the corrosion-resistant layer is 5 µm to 20 µm.

17. The battery device according to any one of claims 14 to 16, wherein the thickness of the waterproof layer is 50 µm to 120 µm.

18. The battery device according to any one of claims 1 to 17, wherein the thickness of the flexible member is 0.05 mm to 0.3 mm.

19. The battery device according to claim 18, wherein the thickness of the flexible member is 0.08 mm to 0.2 mm.

20. The battery device according to any one of claims 1 to 19, wherein the elastic modulus of the flexible member is 0.1 MPa to 10000 MPa.

21. The battery device according to any one of claims 1 to 20, further comprising a bottom protection plate, wherein the bottom protection plate is arranged on a side of the heat exchange assembly away from the battery cell assembly.

22. The battery device according to any one of claims 2 to 6, wherein the rigid member is configured as a metal plate.

23. The battery device according to any one of claims 1 to 22, wherein the battery cell assembly comprises a plurality of battery cells, the medium flow channel comprises a plurality of sub-flow channels, each battery cell corresponds to the plurality of sub-flow channels, and the extension direction of the sub-flow channel corresponding to the battery cell is perpendicular to the length direction of the battery cell.

24. The battery device according to any one of claims 2 to 6, wherein the flexible member is of a layered structure, the flexible member comprises a metal layer and a non-metal layer, the metal layer and the non-metal layer are sequentially stacked, and the non-metal layer is arranged on a side of the metal layer facing the rigid member.

25. A heat exchange assembly, wherein the heat exchange assembly is the heat exchange assembly of the battery device according to any one of claims 1 to 24, and the heat exchange assembly is used to perform heat exchange with the battery cell assembly.

26. An energy storage device, comprising the battery device according to any one of claims 1 to 24 or the heat exchange assembly according to claim 25.

27. An electrical device, comprising the battery device according to any one of claims 1 to 24, the heat exchange assembly according to claim 25, or the energy storage device according to claim 26.
